# EUROPEAN PATENT APPLICATION

(11) **EP 3 917 220 A1**
(43) Date of publication of application: **01.12.2021**
(21) Application number: 20745943.9
(22) Date of filing: 20.01.2020
(51) Int. Cl.: H04W 52/02

(54) **TERMINAL AND WAKE METHOD THEREOF, LOGISTICS SYSTEM DATA REPORTING METHOD AND SYSTEM THEREOF**

(30) Priority: 21.01.2019 CN 201910055256
(71) Applicant: Shanghai Hongyan Returnable Transit Packagings Co., Ltd., Shanghai 200233 (CN)
(72) Inventor:
(74) Representative: Bardehle Pagenberg Partnerschaft mbB Patentanwälte Rechtsanwälte
(86) International application number: PCT/CN2020/073290
(87) International publication number: WO 2020/151673

(57) **Abstract**

This application relates to the field of logistics, and discloses a terminal and its wake-up method, and a data reporting method and system of a logistics system. The terminal includes a first unit and a second unit. The first unit detects the energy value of the wireless signal at a preset frequency point, if the detected energy value exceeds the preset threshold, wakes up the second unit in sleep. The awakened second unit receives the wireless signal within a preset time period and detects whether there is a preset identification code in the received wireless signal, if the preset identification code is detected, other units in sleep of the terminal are awakened.

## Description

### TECHNICAL FIELD

The application relates to the field of logistics, in particular to the terminal wake-up technology and the data reporting technology of the logistics system.

### BACKGROUND

The intelligent recyclable logistics container includes a wireless terminal, which can access the mobile wireless communication system, such as 3G, 4G, 5g communication system, and send the identification and state information of the logistics container to the server. However, in order to maintain the connection with the mobile wireless communication system, it needs to consume a lot of power, and cannot achieve long-term standby. One solution is to increase the sleeping time of the wireless terminal in the recyclable logistics container, and connect with the server only at the appointed time. But this solution will make the server unable to communicate with the recyclable logistics container in time. Increasing sleep time will lead to the loss of communication timeliness; Ensuring the timeliness of communication will greatly shorten the standby time of wireless terminal. How to not only be able to stand by for a long time, but also make the server communicate with the recyclable logistics equipment in time has become an urgent problem in this field.

### SUMMARY

The purpose of the application is to provide a terminal and its wake-up method, data reporting method and system of logistics system. The application can realize the communication between the server and the wireless terminal in the logistics container in a relatively timely manner under the condition of low power consumption, and reduce the labor cost and material cost of the logistics container management.

In order to solve the above problems, this application discloses a terminal wake-up method, comprising:
A first unit of the terminal detecting the energy value of a wireless signal at a preset frequency, and if the detected energy value exceeding a preset threshold, waking up the second unit in sleep;
A second unit receiving the wireless signal within a preset time period and detecting whether there is a preset identification code in the received wireless signal, and if the preset identification code being detected, waking up other units of the terminal in the sleeping state.

Optionally, if the preset identification code not being detected by the second unit within a preset time period, the second unit entering a sleeping state.

Optionally, the first unit and the second unit belong to a first communication module.

Optionally, the other units in the sleeping state comprising a second communication module, and the communication distance of the second communication module being greater than the communication distance of the first communication module.

Optionally, the first communication module is a Sub-1G module, a Bluetooth module, a Zigbee module, or a WIFI module;

The second communication module is a module based on a mobile communication network.

Optionally, the preset identification code is:
The unique identifier of the terminal, where the unique identifiers of different terminals are different;
Or, the identity of the user to which the terminal belongs, where each user owns one or more terminals;
Or, an identity shared by all terminals.

Optionally, the terminal being installed in a recyclable logistics container, and the terminal further comprising one or more sensors for detecting the state of the recyclable logistics container.

Optionally, the sensor comprising one or any combination of the following: a temperature sensor, a humidity sensor, an acceleration sensor, a gyroscope, a satellite positioning device, and a switching device.

The application also discloses a terminal comprising a first unit and a second unit; wherein,

The first unit being configured to detect the energy value of the wireless signal at a preset frequency point, and if the detected energy value exceeding a preset threshold, the first unit waking up the sleeping second unit;

The second unit being configured to receive the wireless signal within a preset time period and detect whether there is a preset identification code in the received wireless signal, and if the preset identification code being detected, waking up other units of the terminal in the sleeping state.

Optionally, the terminal comprising a first communication module and a second communication module, wherein the first communication module comprising the first unit and the second unit; The communication distance of the second communication module being greater than the communication distance of the first communication module.

Optionally, the other units in the sleeping state including the second communication module.
The application also discloses a terminal, comprising: a first unit and a second unit;
A memory for storing computer-executable instructions; and,
A processor configured to implementing the steps in the method according to any one of claims 1 to 8 when executing the computer executable instructions.

The application also discloses a computer-readable storage medium, wherein, the computer-readable storage medium storing computer-executable instructions, when the computer-executable instructions being executed by a processor, the steps in the method according to any one of claims 1 to 8 being implemented.

The application also discloses a data reporting method for a logistics system, wherein, the logistics system comprising a plurality of logistics containers, each of the logistics containers comprising a terminal, the terminal comprising a first communication module and a second communication module, the first communication module comprising a first unit and a second unit, the communication distance of the second communication module being greater than the communication distance of the first communication module; the method comprising:
The server sending a first instruction to a second communication module of a terminal, wherein the second communication module of the terminal being in a waked-up state;
The terminal which received the first instruction sending a preset identification code at a preset frequency through the first communication module of the terminal;
The first unit of a terminal which is in the sleeping state detecting the energy value of the wireless signal at the preset frequency point, if the detected energy value exceeding a preset threshold, the first unit waking up the second unit of the terminal which is in the sleeping state, the second unit receiving the wireless signal within a preset time period and detecting whether the preset identification code existing in the received wireless signal, if the preset identification code being detected, waking up the second communication module of the terminal, and reporting the information of the terminal to the server through the second communication module.

Optionally, before reporting the information of the terminal to the server through the second communication module, the method further comprising: the terminal receives the first instruction from the server through the second communication module.

Optionally, before reporting the information of the terminal to the server through the second communication module, the method further includes: the terminal receiving the first instruction from other terminals through the first communication module.

Optionally, the first instruction is a data synchronization instruction, and the first instruction includes a synchronization time period;
In the step of the second communication module reporting the information of the terminal to the server, the terminal reports the information of the terminal during the synchronization time period through the second communication module of the terminal.

Optionally, the first instruction is an inventory instruction, requiring all terminals to immediately report current terminal state information.

Optionally, the terminal further includes one or more sensors for detecting the state of the logistics container;
The terminal state information includes state information detected by real-time sensors.

Optionally, the sensor includes one or any combination of the following: a temperature sensor, a humidity sensor, an acceleration sensor, a gyroscope, a satellite positioning device, and a switch device.

Optionally, the preset identification code is:
The identity of the user to which the terminal belongs, where each user owns one or more terminals;
Or, an identity shared by all terminals.

Optionally, the first communication module is a Sub-lGHz module, a Bluetooth module, a Zigbee module or a WIFI module;
The second communication module is a module based on a mobile communication network.

The application also discloses a data reporting system for a logistics system, wherein, the logistics system comprising a plurality of logistics containers, each of the logistics container comprising a terminal; the data reporting system comprising a server and terminals in the logistics containers; wherein,
The server being configured to send a first instruction to a second communication module of a terminal, wherein the second communication module of the terminal being in a waked-up state;;
The terminal comprising a first communication module and a second communication module, the first communication module comprising a first unit and a second unit, the communication distance of the second communication module being greater than the communication distance of the first communication module;
The terminal being configured to send the preset identification code at a preset frequency through the first communication module when the first instruction is received through the second communication module, and, when the terminal being in a sleeping state, the terminal detecting the energy value of the wireless signal at the preset frequency through the terminal's first unit, and if the detected energy value exceeding a preset threshold, waking up the terminal's second unit which being in the sleeping state, and the second unit receiving the wireless signal within a preset time period and detecting whether the preset identification code existing in the received wireless signal, if the preset identification code being detected, waking up the second communication module of the terminal, and reporting the information of the terminal to the server through the second communication module.

Optionally, the first instruction is a data synchronization instruction, and the first instruction includes a synchronization time period; the terminal reports the information of the terminal during the synchronization time period through the second communication module of the terminal.

Optionally, the first instruction is an inventory instruction, requiring all terminals to immediately report current terminal state information.

Compared with the prior art, the embodiments of the present application at least have the following advantages:
The second unit of the terminal is usually in sleeping state. When the first unit detects that the energy value of the wireless signal at a preset frequency exceeds a preset threshold, it wakes up the second unit. The second unit determines whether to wake up other units in the terminal (such as remote communication module, various sensors, microprocessor, etc.) through further detection of the identification code in the wireless signal. Thus, timely and accurate wake-up is achieved while minimizing power consumption. Because most of the units in the terminal can always be in the sleeping state, the power consumption is reduced to the greatest extent. In addition, the first unit can wake up the second unit belonging to the same terminal in time to ensure the timeliness of communication, and the detection of the identification code in the second unit can ensure the accuracy of wake-up. The possibility of power consumption increase caused by false wake-up of interference signal is also reduced.

A short-range first communication module and a long-range second communication module are simultaneously set in the terminal, and the first unit and the second unit are set in the first communication module. The first unit of the first communication module detects the energy value of the wireless signal at a preset frequency point, and wakes up the second unit to detect the identification code in the wireless signal when the energy value exceeds the preset threshold. The second communication module is awakened after the preset identification code is detected to realize the remote communication with the server. This communication mode makes the second communication module with large power consumption in the sleeping state as long as possible, thus greatly reducing the power consumption of the whole terminal. Moreover, because the first unit of short-range communication is always in the detection state, it ensures that the second communication module can be awakened in time when the server need to communicate. Because the logistics containers are usually in a stacked centralized storage state, as long as one of the logistics containers can communicate with the server, it can wake up the nearby logistics containers through the first communication module of the logistics container when necessary.

The terminal can be set in the Internet of Things System, for example, in the recyclable logistics container. Each recyclable logistics container has at least one terminal. In this case, a plurality of terminals form a wireless communication network system with the server through the first communication module and the second communication module, so that each terminal can carry out effective communication with low power consumption (such as performing wake-up process) in the network. Moreover, the low-power communication can prolong the service life of the battery in the recyclable logistics container, and ensure that the battery does not need to be replaced or recharged in a very long time (such as 5 years). While ensuring that the terminal signal is effectively transmitted to the server, it also saves the labor cost and material cost in the process of asset management, and achieves the beneficial effect of energy saving and environmental protection.

The terminal is installed in each logistics container in the logistics system. Each terminal forms a wireless communication network system with the server through the first communication module and the second communication module. The server can send configuration commands and use the wake-up function of each terminal in the network to realize the inventory work of various logistics containers; The configuration command includes synchronization commands and inventory commands, and inventory commands can be sent according to time sequence or area. Asset managers can carry out inventory management of various logistics containers according to different regions or different times according to their own needs, so as to realize the effective management of logistics containers on the service side.

A large number of technical features are recorded in the description of the application, which are distributed in various technical solutions. If all possible combinations of technical features (i.e., technical solutions) of the application are to be listed, the description will be too lengthy. In order to avoid this problem, the technical features disclosed in the above invention content, the technical features disclosed in the following embodiments and examples, and the technical features disclosed in the drawings may be freely combined with each other to form various new technical solutions (these technical solutions are considered to have been recorded in the description), Unless this combination of technical features is technically infeasible. For example, feature A + B + C is disclosed in one example, and feature A + B + D + E is disclosed in another example. Feature C and D are equivalent technical means that play the same role. Technically, only one can be used at the same time, and feature E can be combined with feature C. then, the scheme of A + B + C + D should not be regarded as recorded because it is technically infeasible, the scheme of A + B + C + E should be regarded as recorded.

### BRIEF DESCRIPTION OF THE DRAWINGS

Fig. 1 is a schematic flowchart of a terminal wake-up method according to the first embodiment of the present application
Fig. 2 is a schematic diagram of the terminal structure according to the second embodiment of the present application
Fig. 3 is a schematic flow chart of the data reporting method of the logistics system according to the third embodiment of the present application
Fig. 4 is a schematic structural diagram of an embodiment of a data reporting system of a logistics system according to the fourth embodiment of the present application

### DETAILED DESCRIPTION

In the following description, many technical details are proposed in order to enable readers to better understand this application. However, those of ordinary skill in the art can understand that even without these technical details and various changes and modifications based on the following embodiments, the technical solution claimed in this application can be realized.

Explanation of some concepts:
RFID, Radio Frequency Identification
ZigBee: Chinese name "purple bee agreement".
Sub-lg: wireless communication below 1GHz, such as 315MHz, 433MHz, 868mhz, 915MHz, etc.

In order to make the object, technical solution and advantages of the application clearer, the implementation mode of the application will be further described in detail in combination with the drawings.

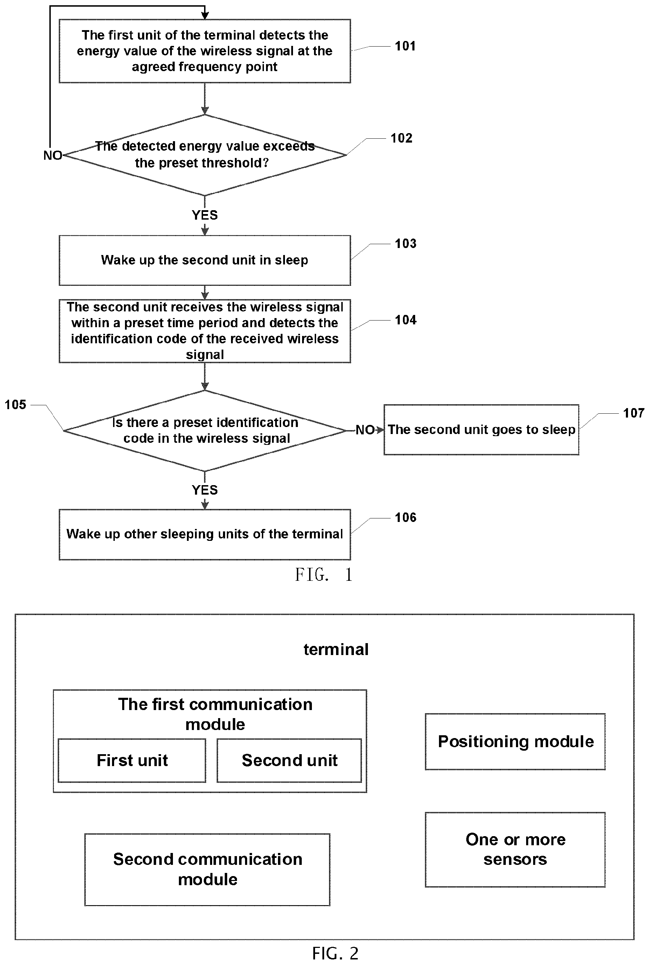

The first embodiment of the present application relates to a terminal wake-up method, the flow of which is shown in Fig. 1, and the method includes the following steps:
Step 101: the first unit of the terminal detects the energy value of the wireless signal at a preset frequency. Optionally, the detection in step 101 can be performed periodically, but the period is usually short enough to ensure the timeliness of communication. That is, the entire terminal can be awakened in time when needed.

In the step 101, the preset frequency point is set according to the type of the first communication module. For example, if the first communication module is a Sub-1 GHz module, the preset frequency point may be 315 MHz, 433 MHz, 868 MHz, or 915 MHz.

Step 102: determine "whether the detected energy value exceeds a preset threshold". If the detected energy value does not exceed the preset threshold, the second unit remains in the sleeping state, and returns to step 101 to continue the detection. Otherwise, step 103 is executed to wake up the second unit in sleep.

The preset threshold can be set according to the situation. Optionally, the preset threshold is set to -85dB. Specifically, the preset threshold determines the range of the second units which will be waked up. Due to the need to save power consumption and the control of the radio management department, the transmission power cannot be increased indefinitely. For example: It is generally defined as 17dB in China. Taking into account the attenuation of wireless signal transmission (generally, it will attenuate to about -95dB after being transmitted at a visible distance of 1000 meters) and other environmental factors, the preset threshold is set to a value higher than -95dB, such as -85dB,- 80dB and so on.

Step 104: the second unit receives the wireless signal within a preset time period, and detects the identification code of the received wireless signal.

The size of the preset time period can be set according to the situation. Optionally, the preset time period may be 100 ms; optionally, the preset time period may be 90 ms, and so on.

Step 105: determining whether there is a preset identification code in the wireless signal. If the preset identification code exists in the wireless signal, then step 106 is executed to wake up other sleeping units of the terminal (for example, remote communication modules, various sensors, microprocessors, etc.). Otherwise, step 107 is executed, and the second unit enters a sleeping state.

The identification code can be set in various ways. Optionally, the identification code is set as the unique identification of the terminal, where the unique identifications of different terminals are different. Optionally, the identification code is set to the identification of the user to which the terminal belongs, where each user owns one or more terminals. Optionally, the identification code is set as an identification shared by all terminals. Optionally, there may be a plurality of preset identification codes in a terminal, and the terminal may be waked up with any one of the identification codes.

Optionally, the identification code may be, but is not limited to, a wireless local area network identification code. In an optional embodiment, the identification code is a wireless local area network identification code, and the peripheral terminal will judge the identification code within 100ms after being awakened. If the judgment result is the preset wireless local area network identification code, the terminal will continue to work and receive subsequent data. Otherwise, it is considered to be an interference signal, and the terminal does not perform subsequent work and switches to a sleeping state.

Optionally, the first unit and the second unit belong to the first communication module.

Optionally, the first communication module is a micro-power wireless communication module, and the first communication module is preferably a wireless communication module with the characteristics of strong penetrating ability and low power consumption.

The types of the first communication module are various. Optionally, the first communication module is a Sub-lGHz module. Optionally, the first communication module is a Bluetooth module. Optionally, the first communication module is a Zigbee module. Optionally, the first communication module is a WIFI module.

Optionally, in the step 106, other units in sleeping state include a second communication module, and the communication distance of the second communication module is greater than the communication distance of the first communication module.

The second communication module is a remote communication module (usually the communication distance of the second communication module is much longer than the first communication module), and the second communication module is used for data transmission with the server and processing the interaction between the terminal and the server. Optionally, the second communication module may be a module based on a mobile communication network, and the mobile communication network may be a communication network capable of realizing remote communication, such as 2G, 3G, 4G, and 5G.

The terminal can be installed in the Internet of Things System, and optionally, the terminal can be installed in a recyclable logistics container.

Optionally, the terminal is a smart terminal. The terminal may have more components. Optionally, the terminal may include a positioning module. The positioning module may be, but not limited to, an RFID module to solve the problem of indoor short-range positioning. Optionally, the terminal may further include one or more sensors for detecting the state of the recyclable logistics container.

There are various types of the sensor. Optionally, the sensor includes a temperature sensor, a humidity sensor, an acceleration sensor, a gyroscope, a satellite positioning device, a switch device, and the like.

The second embodiment of the present application relates to a terminal, the structure of the terminal is shown in FIG. 2, and the terminal includes a first unit and a second unit.

In detail:
The first unit is configured to detect the energy value of the wireless signal at a preset frequency. If the detected energy value exceeds a preset threshold, wake up the second unit which is in sleeping state. Wherein, the first unit detects the energy value of the wireless signal at the preset frequency point, which may be performed periodically. However, the period is usually short enough to ensure the timeliness of communication, that is, the entire terminal can be awakened in time when needed.

The preset threshold may be set according to the situation. Optionally, the preset threshold is set to -85dB. Specifically, the preset threshold determines the range in which the second units will be waked up. In order to save power consumption and the control of the radio management department, the transmission power cannot be increased indefinitely. For example, it is generally defined as 17dB in China. Taking into account the attenuation of wireless signal transmission (attenuation to about -95dB after transmission at 1000 meters in general visual distance) and interference from other environmental factors, the preset threshold may be set to be higher than -95dB Value.

The second unit is used for receiving wireless signals within a preset time period and detecting whether there is a preset identification code in the received wireless signals. If the preset identification code is detected, other sleeping units (such as remote communication modules, various sensors, microprocessors, etc.) of the terminal are awakened.

The size of the preset time period can be set according to the situation. Optionally, the preset time period is set to 100 ms. Optionally, the preset time period can be set to 90ms, and so on.

There are many ways to set the identification code. Optionally, the identification code is set as the unique identification of the terminal. wherein, the unique identifiers of different terminals are different. Optionally, the identification code is set as the identification of the user to which the terminal belongs. Wherein, each user has one or more terminals. Optionally, the identification code is set as an identification shared by all terminals. Optionally, there may be a plurality of preset identification codes in a terminal, and the terminal may be waked up with any one of the identification codes.

Optionally, the identification code may be a wireless local area network identification code. In an optional embodiment, the identification code is a wireless local area network identification code, and the peripheral terminal will judge the identification code within 100ms after being awakened. If it is the preset wireless local area network identification code, the terminal will continue to work and receive subsequent data. Otherwise, it is considered as an interference signal, and the terminal does not perform follow-up work and switches to the sleeping state.

Optionally, the terminal includes a first communication module and a second communication module. Wherein, the first communication module includes a first unit and a second unit. The communication distance of the second communication module is greater than the communication distance of the first communication module.

Optionally, the first communication module is a micro-power wireless communication module. The first communication module is preferably a communication module with the characteristics of strong penetrating ability and low power consumption.

The types of the first communication module are various. Optionally, the first communication module is a Sub-1G module. Optionally, the first communication module is a Bluetooth module. Optionally, the first communication module is a Zigbee module. Optionally, the first communication module is a WIFI module.

The preset frequency point is set according to the type of the first communication module. For example, if the first communication module is a Sub-1 GHz module, the preset frequency point may be 315 MHz, 433 MHz, 868 MHz, or 915 MHz, and so on.

The second communication module is a remote communication module (usually the communication distance of the second communication module is much longer than the first communication module), and the second communication module is used for data transmission with the server and processing the interaction between the terminal and the server. Optionally, the second communication module may be a module based on a mobile communication network, and the mobile communication network may be a communication network capable of realizing remote communication, such as 2G, 3G, 4G, and 5G.

Optionally, the other units in the sleeping state include a second communication module.

The terminal can be set in the Internet of Things system. Optionally, the terminal can be installed (preferably in a detachable installation manner) in a recyclable logistics container. Specifically, each recyclable logistics container has a terminal, so that the terminals of a plurality of recyclable logistics containers form a wireless communication network system with the server through the first communication module and the second communication module, so as to perform communication and data transfer between the terminals, and perform communication and data transfer between the terminals and the server.

Optionally, the terminal is a smart terminal. The terminal may have more components. Optionally, the terminal may include a positioning module. The positioning module may be, but not limited to, an RFID module to solve the problem of indoor short-range positioning. Optionally, the terminal may further include one or more sensors for detecting the state of the recyclable logistics container.

The types of sensors are diverse. Optionally, the sensor includes a temperature sensor, a humidity sensor, an acceleration sensor, a gyroscope, a satellite positioning device, a switch device, and the like.

The first embodiment is a method embodiment corresponding to this embodiment. The technical details in the first embodiment can be applied to this embodiment, and the technical details in this embodiment can also be applied to the first embodiment.

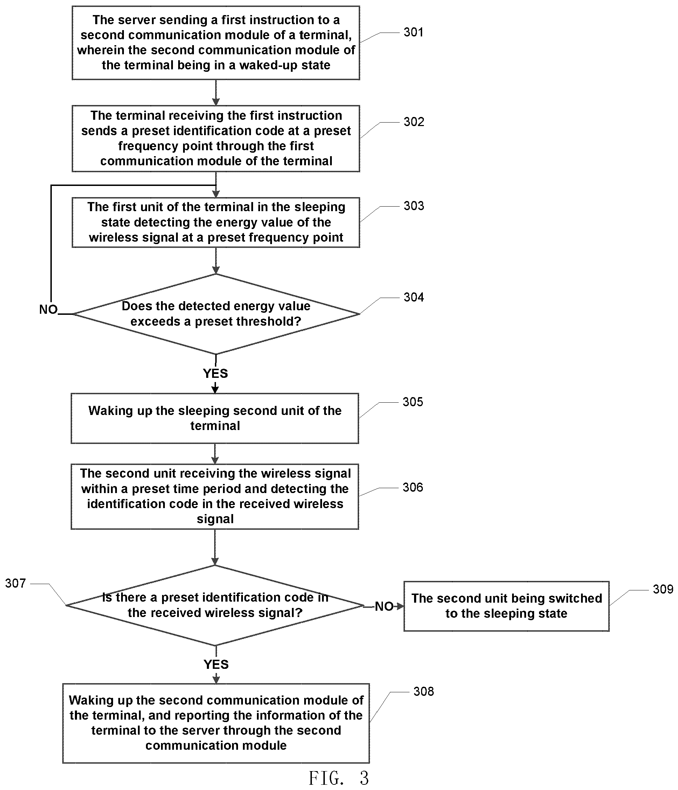

The third embodiment of the present application relates to a data reporting method of a logistics system. The logistics system includes a plurality of logistics containers, each logistics container has a terminal. The terminal includes a first communication module and a second communication module. The first communication module includes a first unit and a second unit, and the communication distance of the second communication module is greater than the communication distance of the first communication module. The process of the method is shown in Figure 3. The method specifically includes the following steps:
Step 301: The server sends a first instruction to a second communication module of a terminal, wherein the second communication module of the terminal being in a waked-up state.
Step 302: the terminal receiving the first instruction sends the preset identification code at the preset frequency through the first communication module of the terminal.
Step 303: The first unit of a terminal which is in the sleeping state detects the energy value of the wireless signal at the preset frequency point. Optionally, the detection in step 303 may be performed periodically, but the period is generally short enough to ensure the timeliness of communication, that is, the entire terminal can be awakened in time when needed.
Step 304: The first unit determines whether the detected energy value exceeds a preset threshold or not.

If the detected energy value exceeds the preset threshold, then step 305 is executed to wake up the second unit (which is in the sleeping state) of the terminal in sleep. Otherwise, the second unit remains in the sleeping state, and returns to step 303 to continue the detection.

The preset threshold can be set according to the situation. Optionally, the preset threshold is set to -85dB. Specifically, the preset threshold determines the range of wake-up of the second unit. In order to save power consumption and government regulation, the transmission power cannot be increased indefinitely. For example, in China, we define it as 17dB, taking into account the attenuation of wireless signal transmission (generally, it will attenuate to- About 95dB) and other environmental factors, the preset threshold can be set to a value higher than -95dB.

Step 306: the second unit receives the wireless signal within a preset time period and detects the identification code in the received wireless signal.

The size of the preset time period can be set according to the situation. Optionally, the preset time period can be set to 100 ms; optionally, the preset time period can be set to 90 ms, and so on.

Step 307: the second unit determines whether there is a preset identification code in the received wireless signal.

If there is a preset identification code in the received wireless signal, then go to step 308, the second communication module of the terminal is waked up, and the information of the terminal is reported to the server through the second communication module; otherwise, go to step 309, the second unit is switched to sleeping state.

There are various ways to set the identification code. Optionally, the identification code is set as the identification of the user to which the terminal belongs, where each user has one or more terminals; optionally, the identification code is Set as an identity shared by all terminals.

Optionally, the identification code may be, but is not limited to, a wireless local area network identification code. In an optional embodiment, the identification code is a wireless local area network identification code, and the peripheral terminal will judge the identification code within 100ms after being awakened. If it is the preset wireless local area network identification code, the terminal will continue to work and receive subsequent data , otherwise it is considered as an interference signal, and the terminal will no longer perform follow-up work and switch to a sleeping state.

Optionally, before "reporting the information of the terminal to the server through the second communication module" in step 308, the method further includes: the terminal receives the first instruction from the server through the second communication module.

Optionally, before "reporting the information of the terminal to the server through the second communication module" in step 308, the method further includes: the terminal receives the first instruction from other terminals through the first communication module.

After the second communication module sends data, it will wait for a time gap, and the server will send the first instruction during this time gap. The first instruction may be set according to user needs. Optionally, the first instruction is a data synchronization instruction, which includes a synchronization time period. In the step of reporting the information of the terminal to the server through the second communication module, the terminal reports the information of the terminal during the synchronization time period through the second communication module of the terminal. Optionally, the first instruction is an inventory instruction, requiring all terminals to immediately report current terminal state information.

Specifically, the terminals of the logistics containers forms a wireless communication network system with the server through the first communication module and the second communication module to perform communication and data transmission. The synchronization command realizes the synchronization of the data in the outlets, and sends the data at a certain time period. In this case, each outlet can complete the data collection without the need to periodically send it regularly. Thereby reducing the power consumption of each terminal. The inventory command realizes the instantaneous transmission of data within the network. After the terminals receive the inventory command, the terminals within the wireless communication network system will be awakened, and then the data will be transmitted.

The inventory command can be sent according to time sequence or area. Optionally, the inventory command is sent according to time sequence. Staggering the inventory time may reduce the pressure on the server and ensure the integrity of the data (avoid data concurrency conflicts). Optionally, send data according to region, and data inventory commands can be carried out at all outlets in a large area (such as the whole country), and managers can see the distribution and usage of all assets in a timely manner.

Optionally, the first communication module is a micro-power wireless communication module. The first communication module is preferably a communication module with the characteristics of strong penetrating ability and low power consumption.

The types of the first communication module may be various. Optionally, the first communication module is a Sub-lGHz module. Optionally, the first communication module is a Bluetooth module. Optionally, the first communication module is a Zigbee module. Optionally, the first communication module is a WIFI module.

The second communication module is a remote communication module, used for data transmission and processing the interactive logic of the terminal and the server. Optionally, the second communication module is a module based on a mobile communication network. The mobile communication network may be 2G, 3G, 4G, 5G and other communication networks capable of realizing remote communication.

The preset frequency point in step 303 may set according to the type of the first communication module. For example, if the first communication module is a Sub-1 GHz module, the preset frequency point may be 315 MHz, 433 MHz, 868 MHz, or 915 MHz.

Optionally, the terminal is a smart terminal. The terminal may have more components. Optionally, the terminal may include a positioning module. The positioning module may be, but not limited to, an RFID module to solve the problem of indoor short-range positioning. Optionally, the terminal may further include one or more sensors for detecting the state of the recyclable logistics container.

The types of sensors are diverse. Optionally, the sensor includes a temperature sensor, a humidity sensor, an acceleration sensor, a gyroscope, a satellite positioning device, a switch device, and the like.

The terminals involved in the first and second embodiments are the same as the implementation of the terminal in this embodiment. The technical details of the terminals in the first and second embodiments can be applied to this embodiment. The technical details of the terminal can also be applied to the first embodiment and the second embodiment.

The fourth embodiment of the present application relates to a data reporting system of a logistics system. The logistics system includes a plurality of logistics containers, each of which has a terminal. The data reporting system includes a server and a terminal.

In details:
The server is configured to send the first instruction to the terminal in the wake-up state of the second communication module through the second communication module.

The terminal includes a first communication module and a second communication module. The first communication module includes a first unit and a second unit, and the communication distance of the second communication module is greater than the communication distance of the first communication module. The terminal is configured to send the preset identification code at a preset frequency through the first communication module when the first instruction is received through the second communication module, and, when the terminal being in a sleeping state, the terminal detecting the energy value of the wireless signal at the preset frequency through the terminal's first unit, and if the detected energy value exceeding a preset threshold, waking up the terminal's second unit which being in the sleeping state, and the second unit receiving the wireless signal within a preset time period and detecting whether the preset identification code existing in the received wireless signal, if the preset identification code being detected, waking up the second communication module of the terminal, and reporting the information of the terminal to the server through the second communication module.

Optionally, the first unit detects the energy value of the wireless signal at a preset frequency point, which can be performed periodically, but the period is usually short enough to guarantee the timeliness of communication, that is, it can be used when needed and wake up the entire terminal in time.

The preset threshold can be set according to the situation. Optionally, the preset threshold is set to -85dB. Specifically, the preset threshold determines the range of wake-up of the second unit. In order to save power consumption and government regulation, the transmission power cannot be increased indefinitely. For example: Generally, we define it as 17dB in China. Taking into account the attenuation of wireless signal transmission (attenuation to about -95dB after transmission at 1000 meters in general visual distance) and interference from other environmental factors, the preset threshold can be set higher than- The value of 95dB.

The size of the preset time period may be set according to the situation. Optionally, the preset time period may be set to 100 ms; optionally, the preset time period may be set to 90 ms, and so on.

The preset frequency point is set according to the type of the first communication module. For example, if the first communication module is a Sub-lGHz module, the preset frequency point may be 315MHz, 433MHz, 868 MHz, or 915 MHz.

After the second communication module sends data, it will wait for a time gap, and the server will send the first instruction during this time gap. The first instruction may be set according to user needs. Optionally, the first instruction is a data synchronization instruction, which includes a synchronization time period. In the step of reporting the information of the terminal to the server through the second communication module, the terminal reports the information of the terminal during the synchronization time period through the second communication module of the terminal. Optionally, the first instruction is an inventory instruction, requiring all terminals to immediately report current terminal state information.

Specifically, the terminals of the logistics containers forms a wireless communication network system with the server through the first communication module and the second communication module to perform communication and data transmission. The synchronization command realizes the synchronization of the data in the outlets, and sends the data at a certain time period. In this case, each outlet can complete the data collection without the need to periodically send it regularly. Thereby reducing the power consumption of each terminal. The inventory command realizes the instantaneous transmission of data within the network. After the terminals receive the inventory command, the terminals within the wireless communication network system will be awakened, and then the data will be transmitted.

The inventory command can be sent according to time sequence or area. Optionally, the inventory command is sent according to time sequence. Staggering the inventory time may reduce the pressure on the server and ensure the integrity of the data (avoid data concurrency conflicts). Optionally, send data according to region, and data inventory commands can be carried out at all outlets in a large area (such as the whole country), and managers can see the distribution and usage of all assets in a timely manner.

There are many ways to set the identification code. Optionally, the identification code is set as the identification of the user to which the terminal belongs, and each user has one or more terminals; optionally, the identification code is set Defined as an identity shared by all terminals.

Optionally, the identification code may be a wireless local area network identification code. In an optional embodiment, the identification code is a wireless local area network identification code. After the peripheral terminal is awakened, the identification code will be judged within 100 ms. If it is the preset wireless local area network identification code, the terminal will continue to work and receive subsequent data, otherwise it will be considered as an interference signal, and the terminal will no longer perform subsequent work and switch to a sleeping state.

Optionally, the first communication module is a micro-power wireless communication module. Preferably, the first communication module is a wireless communication module with the characteristics of strong penetrating ability and low power consumption.

The types of the first communication module are various. Optionally, the first communication module is a Sub-lGHz module; optionally, the first communication module is a Bluetooth module; optionally, the first communication module is a Zigbee module; optionally, the first communication module is a WIFI module.

The second communication module is a remote communication module, which is responsible for data transmission and processing the interaction logic between the terminal and the server. Optionally, the second communication module is a module based on a mobile communication network. The mobile communication network may be 2G, 3G, 4G, 5G and other communication networks capable of realizing remote communication.

Optionally, the terminal is a smart terminal. The terminal may have more components. Optionally, the terminal may include a positioning module. The positioning module may be, but not limited to, an RFID module to solve the problem of indoor short-range positioning. Optionally, the terminal may further include one or more sensors for detecting the state of the recyclable logistics container.

The types of sensors are diverse. Optionally, the sensor includes a temperature sensor, a humidity sensor, an acceleration sensor, a gyroscope, a satellite positioning device, a switch device, and the like.

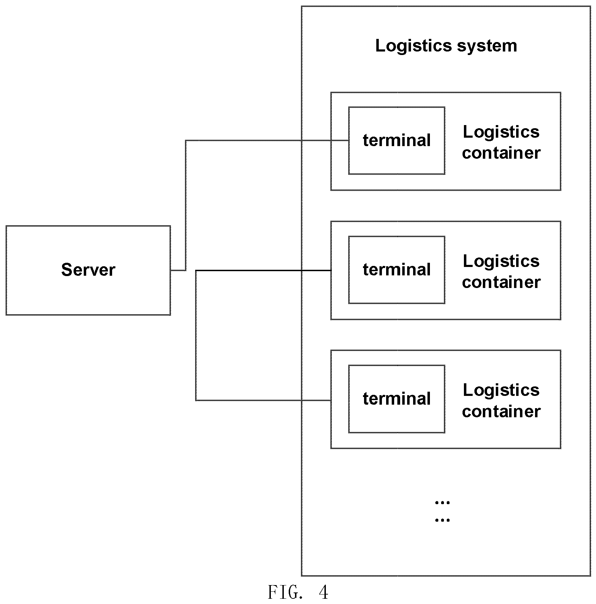

Fig. 4 is a schematic structural diagram of an embodiment of the data reporting system of the logistics system according to the fourth embodiment of the present application.

The third embodiment is a method embodiment corresponding to this embodiment. The technical details in the third embodiment can be applied to this embodiment, and the technical details in this embodiment can also be applied to the third embodiment.

It should be noted that the recyclable logistics container in this specification is a specific embodiment of the logistics container.

It should be noted that those skilled in the art should understand that the implementation functions of each module shown in the foregoing terminal implementation can be understood with reference to the relevant description of the foregoing terminal wake-up method. The function of each module shown in the foregoing terminal embodiment can be realized by a program (executable instruction) running on a processor, or can be realized by a specific logic circuit. If the foregoing terminal in the embodiment of the present application is implemented in the form of a software function module and sold or used as an independent product, it may also be stored in a computer readable storage medium. Based on this understanding, the technical solutions of the embodiments of the present application can be embodied in the form of a software product in essence or a part that contributes to the prior art. The computer software product is stored in a storage medium and includes several instructions for A computer device (which may be a personal computer, a server, or a network device, etc.) executes all or part of the methods described in the various embodiments of the present application. The aforementioned storage media include: U disk, mobile hard disk, Read Only Memory (ROM, Read Only Memory), magnetic disk or optical disk and other media that can store program codes. Based on this, the embodiments of the present application are not limited to any specific combination of hardware and software.

Correspondingly, the embodiments of the present application also provide a computer-readable storage medium in which computer-executable instructions are stored, and when the computer-executable instructions are executed by a processor, each method implementation of the present application is implemented. Computer-readable storage media include permanent and non-permanent, removable and non-removable media, and information storage can be realized by any method or technology. The information can be computer-readable instructions, data structures, program modules, or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, CD-ROM, digital versatile disc (DVD) or other optical storage, Magnetic cassettes, magnetic tape storage or other magnetic storage devices or any other non-transmission media can be used to store information that can be accessed by computing devices. According to the definition in this article, computer-readable storage media does not include transitory media, such as modulated data signals and carrier waves.

In addition, the embodiments of the present application also provide a terminal, which includes a first unit, a second unit; and a memory for storing computer-executable instructions, and a processor; the processor is configured to execute the computer in the memory. The steps in the foregoing method implementation manners are implemented when the instructions are executed. wherein, the processor may be a central processing unit (Central Processing Unit, "CPU"), other general-purpose processors, digital signal processors (Digital Signal Processor, "DSP"), and application specific integrated circuits (Application Specific Integrated Circuits). Integrated Circuit, referred to as "ASIC") and so on. The aforementioned memory may be a read-only memory (read-only memory, "ROM" for short), a random access memory (random access memory, "RAM" for short), a flash memory (Flash), a hard disk, or a solid state hard disk, etc. The steps of the method disclosed in the various embodiments of the present invention may be directly embodied as being executed and completed by a hardware processor, or executed and completed by a combination of hardware and software modules in the processor.

It should be noted that in the application documents of this patent, relational terms such as first and second are only used to distinguish one entity or operation from another entity or operation, and do not necessarily require or imply these There is any such actual relationship or sequence between entities or operations. Moreover, the terms "include", "include" or any other variants thereof are intended to cover non-exclusive inclusion, so that a process, method, article or device including a series of elements not only includes those elements, but also includes those that are not explicitly listed Other elements of, or also include elements inherent to this process, method, article or equipment. If there are no more restrictions, the element defined by the sentence "includes one" does not exclude the existence of other same elements in the process, method, article, or equipment that includes the element. In the application documents of this patent, if it is mentioned that an act is performed based on a certain element, it means that the act is performed at least based on that element, which includes two situations: performing the act only based on the element, and performing the act based on the element and Other elements perform the behavior. Multiple, multiple, multiple, etc. expressions include two, two, two, and two or more, two or more, and two or more expressions.

All documents mentioned in this application are considered to be included in the disclosure of this application as a whole, so that they can be used as a basis for modification when necessary. In addition, it should be understood that the above descriptions are only preferred embodiments of this specification, and are not used to limit the protection scope of this specification. Any modification, equivalent replacement, improvement, etc. made within the spirit and principle of one or more embodiments of this specification should be included in the protection scope of one or more embodiments of this specification.

## Claims

1. A terminal wake-up method, comprising:
A first unit of the terminal detecting the energy value of a wireless signal at a preset frequency, and if the detected energy value exceeding a preset threshold, waking up the second unit in sleep;
A second unit receiving the wireless signal within a preset time period and detecting whether there is a preset identification code in the received wireless signal, and if the preset identification code being detected, waking up other units of the terminal in the sleeping state.

2. The method of claim 1, further comprising:
If the preset identification code not being detected by the second unit within a preset time period, the second unit entering a sleeping state.

3. The method of claim 1, wherein the first unit and the second unit belong to a first communication module.

4. The method of claim 3, wherein the other units in the sleeping state comprising a second communication module, and the communication distance of the second communication module being greater than the communication distance of the first communication module.

5. The method of claim 4, wherein the first communication module is a Sub-1G module, a Bluetooth module, a Zigbee module, or a WIFI module;
The second communication module is a module based on a mobile communication network.

6. The method of claim 1, wherein the preset identification code is:
The unique identifier of the terminal, where the unique identifiers of different terminals are different;
Or, the identity of the user to which the terminal belongs, where each user owns one or more terminals;
Or, an identity shared by all terminals.

7. The method of claim 1, wherein the terminal being installed in a recyclable logistics container, and the terminal further comprising one or more sensors for detecting the state of the recyclable logistics container.

8. The method according to claim 7, wherein the sensor comprising one or any combination of the following: a temperature sensor, a humidity sensor, an acceleration sensor, a gyroscope, a satellite positioning device, and a switching device.

9. A terminal comprising a first unit and a second unit; wherein,
The first unit being configured to detect the energy value of the wireless signal at a preset frequency point, and if the detected energy value exceeding a preset threshold, the first unit waking up the sleeping second unit;
The second unit being configured to receive the wireless signal within a preset time period and detect whether there is a preset identification code in the received wireless signal, and if the preset identification code being detected, waking up other units of the terminal in the sleeping state.

10. The terminal of claim 9, the terminal comprising a first communication module and a second communication module, wherein the first communication module comprising the first unit and the second unit; The communication distance of the second communication module being greater than the communication distance of the first communication module.

11. The terminal of claim 10, wherein the other units in the sleeping state including the second communication module.

12. A terminal, comprising: a first unit and a second unit;
A memory for storing computer-executable instructions; and,
A processor configured to implementing the steps in the method according to any one of claims 1 to 8 when executing the computer executable instructions.

13. A computer-readable storage medium, wherein, the computer-readable storage medium storing computer-executable instructions, when the computer-executable instructions being executed by a processor, the steps in the method according to any one of claims 1 to 8 being implemented.

14. A data reporting method for a logistics system, wherein, the logistics system comprising a plurality of logistics containers, each of the logistics containers comprising a terminal, the terminal comprising a first communication module and a second communication module, the first communication module comprising a first unit and a second unit, the communication distance of the second communication module being greater than the communication distance of the first communication module; the method comprising:
The server sending a first instruction to a second communication module of a terminal, wherein the second communication module of the terminal being in a waked-up state;
The terminal which received the first instruction sending a preset identification code at a preset frequency through the first communication module of the terminal;
The first unit of a terminal which is in the sleeping state detecting the energy value of the wireless signal at the preset frequency point, if the detected energy value exceeding a preset threshold, the first unit waking up the second unit of the terminal which is in the sleeping state, the second unit receiving the wireless signal within a preset time period and detecting whether the preset identification code existing in the received wireless signal, if the preset identification code being detected, waking up the second communication module of the terminal, and reporting the information of the terminal to the server through the second communication module.

15. The method of claim 14, wherein, before reporting the information of the terminal to the server through the second communication module, the method further comprising: the terminal receives the first instruction from the server through the second communication module.

16. The method of claim 14, wherein, before reporting the information of the terminal to the server through the second communication module, the method further includes: the terminal receiving the first instruction from other terminals through the first communication module.

17. The method of claim 14, wherein the first instruction is a data synchronization instruction, and the first instruction includes a synchronization time period;
In the step of the second communication module reporting the information of the terminal to the server, the terminal reports the information of the terminal during the synchronization time period through the second communication module of the terminal.

18. The method of claim 14, wherein, the first instruction is an inventory instruction, requiring all terminals to immediately report current terminal state information.

19. The method of claim 18, wherein, the terminal further includes one or more sensors for detecting the state of the logistics container;
The terminal state information includes state information detected by real-time sensors.

20. The method of claim 19, wherein, the sensor includes one or any combination of the following: a temperature sensor, a humidity sensor, an acceleration sensor, a gyroscope, a satellite positioning device, and a switch device.

21. The method according to any one of claims 14-20, wherein, the preset identification code is:
The identity of the user to which the terminal belongs, where each user owns one or more terminals;
Or, an identity shared by all terminals.

22. The method of claims 14-20, wherein, the first communication module is a Sub-lGHz module, a Bluetooth module, a Zigbee module or a WIFI module;
The second communication module is a module based on a mobile communication network.

23. A data reporting system for a logistics system, wherein, the logistics system comprising a plurality of logistics containers, each of the logistics container comprising a terminal; the data reporting system comprising a server and terminals in the logistics containers; wherein,
The server being configured to send a first instruction to a second communication module of a terminal, wherein the second communication module of the terminal being in a waked-up state;;
The terminal comprising a first communication module and a second communication module, the first communication module comprising a first unit and a second unit, the communication distance of the second communication module being greater than the communication distance of the first communication module;
The terminal being configured to send the preset identification code at a preset frequency through the first communication module when the first instruction is received through the second communication module, and, when the terminal being in a sleeping state, the terminal detecting the energy value of the wireless signal at the preset frequency through the terminal's first unit, and if the detected energy value exceeding a preset threshold, waking up the terminal's second unit which being in the sleeping state, and the second unit receiving the wireless signal within a preset time period and detecting whether the preset identification code existing in the received wireless signal, if the preset identification code being detected, waking up the second communication module of the terminal, and reporting the information of the terminal to the server through the second communication module.

24. The system of claim 23, wherein, the first instruction is a data synchronization instruction, and the first instruction includes a synchronization time period; the terminal reports the information of the terminal during the synchronization time period through the second communication module of the terminal.

25. The system of claim 23, wherein, the first instruction is an inventory instruction, requiring all terminals to immediately report current terminal state information.
